## Europäisches Patentamt

## European Patent Office

## Office européen des brevets

(11) Veröffentlichungsnummer: **0 244 695**
**A1**

(12) **EUROPÄISCHE PATENTANMELDUNG**

(21) Anmeldenummer: **87105863.2**

(22) Anmeldetag: **22.04.87**

(51) Int. Cl.⁴: **C 02 F 3/00, C 02 F 3/10**

(30) Priorität: **03.05.86 DE 3615103**

(43) Veröffentlichungstag der Anmeldung: **11.11.87**
**Patentblatt 87/46**

(84) Benannte Vertragsstaaten: **AT BE CH DE ES FR GB IT LI NL SE**

(71) Anmelder: **BAYER AG, Konzernverwaltung RP Patentabteilung, D-5090 Leverkusen 1 Bayerwerk (DE)**

(72) Erfinder: **Reischl, Artur, Dr., Strittberg 18, D-7821 Höchenschwand (DE)**

(54) **Verwendung von Polymerträgermassen als Träger bei biochemischen Umwandlungsprozessen in wässriger Phase.**

(57) Verwendung von in Wasser aufschwimmenden, hydrophilen, füllstoffhaltigen, offenporigen Polymerträgermassen als Träger bei aeroben, anoxischen oder anaeroben biochemischen Umwandlungsprozessen, insbesondere bei der biologischen Abwasserreinigung, wobei man solche Polymerträgermassen verwendet, die aus einzelnen Partikeln bestehen, welche in wassergesättigter und mit während des Prozesses gebildeter Biomasse beladener Form zu mindestens 70 Vol.-% eine geringfügige unter der Dichte des wäßrigen Milieus liegende mittlere Dichte aufweisen.

BAYER AKTIENGESELLSCHAFT     5090 Leverkusen, Bayerwerk
Konzernverwaltung RP
Patentabteilung     Br/bo/c


Verwendung von Polymerträgermassen als Träger bei biochemischen Umwandlungsprozessen in wäßriger Phase

Die vorliegende Erfindung betrifft die Verwendung von hydrophilen, offenporigen, in Wasser aufschwimmenden Polymerträgermassen als Träger bei biochemischen Umwandlungsprozessen, insbesondere bei der biochemischen Abwasserreinigung.

Die Verwendung von anorganischen oder organischen Trägermaterialien als Träger bei biologischen Umwandlungsprozessen, insbesondere bei der biologischen Abwasserreinigung, ist bekannt (vgl. z.B. DE-OS 34 02 697 bzw. EP-OS 150 747, EP-OS 150 747 bzw. die in dieser Veröffentlichung abgehandelte Literatur). Im allgemeinen erfolgt die biologische Abwasserreinigung in Belebtschlammbecken oder turmartigen Bioreaktoren, in denen die Träger als Fest-, Fließ- oder Wirbelbett in Form von zur Sedimentbildung neigenden Suspensionen vorliegen.

Jetzt wurde überraschenderweise gefunden, daß die Verwendung von solchen Trägermassen, die in wassergesättigtem,

Le A 24 509 - Ausland

mit Biomasse beladenem Zustand eine geringfügig unter der Dichte des wäßrigen Milieus liegende mittlere Dichte aufweisen und daher in dem wäßrigen Milieu aufschwimmen zu einer Reihe bemerkenswerter Vorteile bei der biologischen Abwasserreinigung führt:

Der Energieaufwand, der zur Beseitigung von Konzentrationsunterschieden im Reaktor erforderlich ist, ist wesentlich geringer als im Falle der Verwendung von sedimentierenden Trägermaterialien.

Im Vergleich zu den bisher bekanntgewordenen sedimentierenden Trägermaterialien haben die erfindungsgemäß einzusetzenden, spezifisch leichteren Trägermaterialien den Vorteil, daß sie zur Erreichung der gleichen Wirkung in wesentlich geringeren Mengen eingesetzt werden können.

Gegenstand der Erfindung ist die Verwendung von in Wasser aufschwimmenden, hydrophilen, offenporigen Polymerträgermassen als Träger bei aeroben, anoxischen oder anaeroben biochemischen Umwandlungsprozessen in wäßriger Phase, dadurch gekennzeichnet, daß man solche Polymerträgermassen verwendet, die aus einzelnen stückigen Partikeln bestehen, und einen Füllstoff enthalten wobei diese Partikel in wassergesättigter und mit während des Prozesses gebildeter Biomasse beladener Form zu mindestens 70 Vol.-% eine geringfügig unter der Dichte des wäßrigen Milieus liegende Dichte aufweisen.

Der Füllstoffgehalt der Polymerträgermassen beträgt 3-60 Gew.-%, bevorzugt 5-50 Gew.-% und besonders bevorzugt 10-30 Gew.-%, bezogen auf Trockensubstanz des Trägers.

Le A 24 509

Bei den erfindungsgemäß zu verwendenden Trägermaterialien handelt es sich um solche, die bezüglich ihrer chemischen Zusammensetzung weitgehend den bislang bekanntgewordenen, sedimentierenden Trägermassen entsprechen. Dies bedeutet, daß als erfindungsgemäß zu verwendende Trägermassen solche auf Basis von Polymerisaten und/oder Polykondensaten und/oder Polyadditionsprodukten verwendet werden können. Die Herstellung derartiger Trägermassen ist beispielsweise in DE-OS 3 402 696, 3 402 697, 3 402 698 oder in den deutschen Patentanmeldungen P 35 26 183.8 (DE-OS 3 526 183), P 35 26 184.6 (DE-OS 3 526 184) oder P 35 26 185.4 (DE-OS 3 526 185) beschrieben.

Die Herstellung der beim erfindungsgemäßen Verfahren einzusetzenden Trägermassen erfolgt in völliger Analogie zu den Herstellungsverfahren dieser Literaturstellen. Die in diesen Literaturstellen beschriebenen und für die Abwasserreinigung eingesetzten Trägermaterialien weisen eine solche Dichte auf, daß sie in wassergesättigter und mit Biomasse beladener Form in dem zu reinigenden Abwasser sedimentieren. Die beim erfindungsgemäßen Verfahren einzusetzenden Trägermassen entsprechen zwar bezüglich ihrer chemischen Zusammensetzung weitgehend diesen sedimentierenden Trägermassen, jedoch wird bei ihrer Herstellung in Analogie zu den genannten Literaturstellen durch geeignete Wahl der Art und Mengen der eingesetzten Komponenten dafür Sorge getragen, daß sie die obengenannte Eigenschaft aufweisen, in dem wäßrigen Milieu aufzuschwimmen. Unter "aufschwimmen" ist hierunter zu verstehen, daß die Trägermaterialien in wassergesättigtem, und mit Biomasse beladenem Zustand bei einem "Füllvolumen" von 50 Vol.-%, vorzugsweise zu mindestens 80 Vol.-% und besonders bevorzugt zu

Le A 24 509

90 bis 100 Vol.-% in den oberen zwei Dritteln der wäßrigen Phase suspendiert vorliegen. Hieraus folgt andererseits, daß nur ganz unwesentliche Anteile der Trägermaterialien, d.h. bis max. 10 %, vorzugsweise bis max. 2 % die Oberfläche des wäßrigen Milieus überragen. Im allgemeinen schwimmen die Trägermassen im Sinne dieser Definition dann auf, wenn die einzelnen Partikel in wassergesättigter und mit Biomasse beladener Form zu mindestens 70 Vol.-% ein geringfügig unter der Dichte des wäßrigen Milieus liegende Dichte aufweisen.

Der Begriff "Füllvolumen" bedeutet in diesem Zusammenhang den in Prozent ausgedrückten Volumenanteil des mit wäßrigem Milieu gefüllten Reaktors, der von dem wassergesättigten, mit Biomasse beladenen Trägermaterial eingenommen wird.

Bei den erfindungsgemäß zu verwendenden Trägermassen handelt es sich somit um aufschwimmende, hoch wasseraufnahmefähige, poröse Polymerträgermassen, die vorzugsweise hydrophile Füllstoffe gebunden enthalten und auch bei jahrelangem Aufenthalt in Wasser, insbesondere in biologisch arbeitenden Klärbecken, beständig sind.

Als Bindemittel für die Füllstoffe dienen Polymerisate, die in Form ihrer wäßrigen Dispersionen koaguliert werden, und/oder Polyurethan(harnstoff)-Massen, die bevorzugt als Polyisocyanat-Prepolymere, gegebenenfalls als wäßrige Emulsion oder als wäßrige Polyurethandispersion eingesetzt werden und für die Füllstoffe eine Matrixfunktion aus-

Le A 24 509

üben. Niedermolekulare Polyisocyanate können als Modifizierungskomponenten für die wäßrigen Polymer-Dispersionen dienen und die Bindekraft der Polymermatrix erhöhen. Die Polymeren können nichtionisch hydrophiler Natur sein und/oder anionische und/oder kationische Gruppen im Makromolekül eingebaut enthalten oder im Gemisch mit entsprechenden externen Emulgatoren vorliegen oder auch weitgehend hydrophober Natur sein, fall die Hydrophilie der Trägermassen durch die Verwendung entsprechender, hydrophiler Füllstoffe sichergestellt wird. In vielen Fällen werden bei der biologischen Abwasserreinigung ionische, insbesondere kationische Polymerträger bevorzugt, beispielsweise aus kationischen Polyether-Polyisocyanat-Prepolymeren und Fülsltoffen hergestellte Polyurethan-Schaumstoffe.

Der Wahl der Füllstoffe, die gegenüber Mikroorganismen inert sein sollten, kommt in Bezug auf das Wasseraufnahmevermögen und die Adsorptionsfähigkeit von im Abwasser gelösten Inhaltsstoffen und hinsichtlich der Ausbildung großer Oberflächen und somit von Hohl- und Schutzräumen für die Ansiedlung von Biomassen eine besondere Bedeutung zu.

Eine Sonderstellung als organische Füllstoffe haben die besonders bevorzugt mitverwendbaren Polyurethanschaumstoffe in zerkleinerter, stückiger Form, insbesondere Polyether-Polyurethan-Blockweichschaumstoffe mit einer mittleren Teilchengröße unter 30 mm, vorzugsweise unter 20 mm, besonders von 3 bis 15 mm, die als Abfallgranulat in großen Mengen verfügbar sind. Halbhart- oder Hart-PUR-Schaumstoffe werden nur in pulverisierter Form mitverwendet.

Le A 24 509

Die Hydrophilie der Trägermassen wird insbesondere durch die Verwendung von hydrophilen (beispielsweise ionischen) Bindemitteln und/oder durch die Mitverwendung von hydrophilen Füllstoffen (bevorzugt Braunkohlenstaub, Aktivkohle, Torf und/oder Magnetit) sichergestellt.

Geeignete Füllstoffe und Bindemittel können im übrigen den obengenannten Literaturstellen entnommen werden.

Die beim erfindungsgemäßen Verfahren einzusetzenden Trägermaterialien stellen in wasserfreiem Zustand Schaumstoffe einer unter 0,3 g/cm³, vorzugsweise unter 0,2 g/cm³ und besonders bevorzugt unter 0,1 g/cm³ liegenden Dichte dar. Sie werden in stückiger Form eingesetzt, wobei die Schaumstoffpartikel im allgemeinen einen mittleren Teilchendurchmesser von unter 10 cm, vorzugsweise von unter 5 cm und besonders bevorzugt von 0,3 bis 2,5 cm aufweisen.

Aufgrund der hohen Hydrophilie der erfindungsgemäß zu verwendenden Trägermaterialien quellen diese bei Kontakt mit Wasser unter vollständiger Wasseraufnahme und Erreichen aufgrund dieser Wasseraufnahme und die bereits kurz nach Inbetriebnahme des Klärprozesses stattfindende Beladung mit Biomasse sehr schnell eine nur noch geringfügig unter der Dichte des wäßrigen Milieus liegende (mittlere) Dichte.

Bei der erfindungsgemäßen Verwendung zur Reinigung von Abwasser kommen im allgemeinen Belebungsbecken oder Abwassertürme zum Einsatz, die mit den erfindungsgemäß zu ver-

Le A 24 509

wendenden Trägermaterialien in einer solchen Menge beladen werden, die einem "Füllvolumen" von 5 bis 65, vorzugsweise 10 bis 50, und insbesondere 10 bis 30 Vol.-% entspricht.

Bei der erfindungsgemäßen Verwendung zur Reinigung von Abwasser wird vorzugsweise so vorgegangen, daß das zu reinigende Abwasser kontinuierlich in den oberen Bereich des Beckens bzw. des Turms eingeleitet und das gereinigte Abwasser kontinuierlich dem unteren Bereich des Beckens bzw. des Turms entnommen werden. Es wäre grundsätzlich jedoch auch möglich, das zu reinigende Abwasser in den unteren Bereich einzuführen und das gereinigte Abwasser aus dem oberen Bereich zu entnehmen, jedoch müßte in diesem Falle dafür Sorge getragen werden, daß die am Abfluß des gereinigten Abwassers konzentriert vorliegenden Trägermaterialien nicht ausgeschwemmt werden.

Das nachstehende Beispiel dient zur weiteren Erläuterung.

Le A 24 509

Beispiel

A) Herstellung einer Polymerträgermasse

Ausgangsmaterialien:

70 Gew.-Teile eines hydrophoben Polyether-Polyurethan-Schaumstoffs der Dichte 0,025 g/cm³, in Würfel von einer Kantenlänge von ca. 12 mm geschnitten;

21,5 Gew.-Teile inaktiver, getrockneter Braunkohlenstaub einer mittleren Teilchengröße von unter 100 µm und einer Restfeuchte von 7 Gew.-%;

10,0 Gew.-Teile des kationischen Isocyanat-Prepolymeren KOPP1-E der DE-OS 3 402 696, Tabelle 1, mit einem NCO-Gehalt von 5,9 Gew.-%;

50 Gew.-Teile Wasser (Temperatur: 50⁰ C).

Die vorgenannten Ausgangsmaterialien werden wie in DE-OS 3 402 696, Methode A3 beschrieben in einem Doppelpaddelschneckentrog gemischt und nach einer Verweilzeit 7 Minuten bei einer Produkttemperatur von 45⁰ C durch eine am Ende des Troges unten befindliche Öffnung in einen Trichter gefördert und mit Hilfe von Preßluft über einen Zyklon in einen Abfüllbehälter gefördert. Das Endprodukt hat die Form von Würfeln und ist hydrophil, so daß es in Wasser sofort benetzt wird und wegen seiner geringfügig unter der Dichte von Wasser liegenden Dichte in Wasser aufschwimmt, jedoch nicht aus dem Wasser ragt.

Le A 24 509

Das gefüllte Polymerträgermaterial hat in Wasser suspendiert einen Trockensubstanzgehalt von 19 kg/m³ Suspension, d.h. der Wasseranteil in und zwischen den offenporigen Polymerträger-Würfeln liegt bei 98,1 %. Aus dem Wasser genommen hat das Trägermaterial folgende Schüttgewichte (kg/m³):

Abgetropft nach 10 Minuten: 308
Abgequetscht (3 bar):       55 (bis kein Wasser mehr
                               abtropft)

Getrocknet bei 100° C:      20
(20 Stck. im Vakuum)

B) Erfindungsgemäße Verwendung für die kontinuierliche anaerobe biologische Reinigung von schwer abbaubare Verunreinigungen enthaltendem Abwasser aus einer Chlorbleiche einer Sulfitzellstoffabrik:

Als Apparatur wurde ein zylindrisches Glasgefäß mit einem Fassungsvolumen von 100 l und einem Verhältnis von Durchmesser zu Höhe von 1:2 verwendet. Der kontinuierliche Zulauf des Abwassers erfolgte durch ein gelochtes, ringförmiges Rohr im oberen Teil, der Ablauf im unteren Teil des Bioreaktors. Am, mit einer Lochblende versehen, Ablauf war ein kommunizierendes Rohr angeschlossen, so daß man den Wasserstand im Gefäß so einstellen konnte, daß er sich 3 cm über dem Zulauf befand.

Das vorstehend beschriebene Polyurethanträgermaterial wurde in den Bioreaktor eingefüllt. Der Füllgrad betrug in wäßriger Suspension 25 Vol.-%.

Le A 24 509

Innerhalb von 5 Wochen und einer mittleren Verweilzeit in dem Durchlaufreaktor von 3 Tagen bildete sich Biomasse in dem Abwasser, das einen Verunreinigungsgrad entsprechend einem CSB-Wert (Chemischer Sauerstoffbedarf) von 4265 mg/l aufwies. Die Mikroorganismen siedelten sich fast ausschließlich auf dem Trägermaterial und in dessen inneren Zellräumen in Form eines Rasens an. Das entstehende Biogas, hauptsächlich Methan, konnte ungehindert durch das Trägermaterial entweichen und wurde am Kopf des Reaktors durch ein Rohr abgeleitet.

Die Eliminierung des chemischen Sauerstoffbedarfs (CSB-Wert) betrug in der 6. Woche, an 3 verschiedenen Tagen gemessen, im Mittel 90 %. Außerdem war das ablaufende, gereinigte Abwasser deutlich aufgehellt. Das eingesetzte Trägermaterial befand sich, mit Biomasse bewachsen, vollständig im oberen Drittel des Bioreaktors.

Le A 24 509

Patentansprüche

1. Verwendung von in Wasser aufschwimmenden, hydrophilen, offenporigen Polymerträgermassen als Träger bei der aeroben, anoxischen oder anaeroben biochemischen Umwandlungsprozessen in wäßriger Phase, dadurch gekennzeichnet, daß man solche Polymerträgermassen verwendet, die aus einzelnen stückigen Partikeln bestehen und einen Füllstoff enthalten, wobei diese Partikel in wassergesättigter und mit während des Prozesses gebildeter Biomasse beladener Form zu mindestens 70 Vol.-% eine geringfügig unter der Dichte des wäßrigen Milieus liegende mittlere Dichte aufweisen.

2. Verwendung gemäß Anspruch 1, dadurch gekennzeichnet, daß man als Polymerträgermassen hydrophile, mit gegenüber Mikroorganismen inerten Füllstoffen beladene Polyurethanschaumstoffe verwendet.

3. Verwendung gemäß Ansprüchen 1 und 2 bei der biologischen Abwasserreinigung.

4. Verwendung gemäß Anspruch 3, dadurch gekennzeichnet, daß man das zu reinigende Abwasser kontinuierlich in den oberen Bereich eines mit Wasser und den Trägermassen befüllten Behälters einleitet und das gereinigte Abwasser kontinuierlich aus dem unteren Bereich des Behälters entnimmt.

5. Verwendung gemäß einem der Ansprüche 1 bis 4, dadurch gekennzeichnet, daß die Polymerträgermassen Ionengruppen enthalten, insbesondere Kationengruppen oder zur Ionenbildung befähigte Gruppen.

Le A 24 509

0244695

Europäisches
Patentamt

**EUROPÄISCHER RECHERCHENBERICHT**

Nummer der Anmeldung

EP 87 10 5863

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,Y | EP-A-0 150 747 (BAYER) <br> * Titelseite: Zusammenfassung; Seite 22, Zeile 24 - Seite 23, Zeile 4 * | 1-4 | C 02 F 3/00 <br> C 02 F 3/10 |
| Y | DE-A-2 905 371 (CHIYODA CHEMICAL ENGINEERING) <br> * Seite 1, Anspruch 1 * | 1-4 | |

RECHERCHIERTE SACHGEBIETE (Int. Cl.4)

C 02 F

Der vorliegende Recherchenbericht wurde für alle Patentansprüche erstellt.

| Recherchenort | Abschlußdatum der Recherche | Prüfer |
|---|---|---|
| DEN HAAG | 30-07-1987 | TEPLY J. |